**Europäisches Patentamt**

**European Patent Office**

**Office européen des brevets**

(19)

(11) Numéro de publication : **0 381 571 B1**

(12)

# FASCICULE DE BREVET EUROPEEN

(45) Date de publication du fascicule du brevet :
**30.12.92 Bulletin 92/53**

(51) Int. Cl.⁵ : **E04F 15/024**

(21) Numéro de dépôt : **90400243.3**

(22) Date de dépôt : **29.01.90**

(54) **Structure de plancher, notamment pour des locaux pourvus d'un équipement informatique.**

(30) Priorité : **03.02.89 FR 8901419**

(43) Date de publication de la demande :
**08.08.90 Bulletin 90/32**

(45) Mention de la délivrance du brevet :
**30.12.92 Bulletin 92/53**

(84) Etats contractants désignés :
**AT BE CH DE DK ES FR GB GR IT LI LU NL SE**

(56) Documents cités :
**EP-A- 0 218 108
EP-A- 0 298 325
WO-A-88/03207
DE-A- 1 759 372
FR-A- 2 483 990
FR-A- 2 564 509
GB-A- 2 097 836
GB-A- 2 190 936
US-A- 4 074 488**

(73) Titulaire : **Ducroux, Alain René Emile**
**48 rue du 19 Janvier**
**F-92380 Garches (FR)**
Titulaire : **Novakovic, Miodrag**
**39 Côte de Beule**
**F-78580 Maule (FR)**

(72) Inventeur : **Ducroux, Alain René Emile**
**48 rue du 19 Janvier**
**F-92380 Garches (FR)**
Inventeur : **Novakovic, Miodrag**
**39 Côte de Beule**
**F-78580 Maule (FR)**

(74) Mandataire : **Berger, Helmut et al**
**Cabinet Z. WEINSTEIN 20, avenue de**
**Friedland**
**F-75008 Paris (FR)**

## Description

L'invention concerne une structure de plancher notamment pour des locaux pourvus d'un équipement informatique, tels que des centres informatiques, salles d'ordinateurs ou bureaux informatisés, du type décrit dans le préambule de la revendication principale.

Une telle structure de plancher est connue par le document GB-A-2 190 136. Dans ces structures, les plots sont solidaires des dalles qui sont juxtaposées sur le sol.

Ces structures présentent l'inconvénient majeur que les dalles qui portent donc de façon permanente les plots sont encombrantes, ce qui pose un problème pour leurs stockages et leurs transports. De plus, dans la mesure où les plots sont réalisés en une seule pièce avec les dalles, chaque version de plots, qui pourraient varier par exemple par leur hauteur, implique une réalisation de dalles à plots spécifiques. Ceci a pour conséquence que des nombreuses versions de dalles à plots, chacune en elle-même encombrante, doivent être stockées, pour être rapidement disponible.

La présente invention a pour but de proposer une solution à ce problème.

Selon l'invention ce but est atteint grâce aux caractéristiques de la partie caractérisante de la revendication 1.

Il est déjà connu par le document FR-A-2 483 990 d'utiliser pour le support des plateaux des plots qui ne sont pas solidaires des dalles. Mais, ces plots prennent directement appui sur le sol, c'est-à-dire ne sont pas solidaires des dalles reposant sur ce dernier. Chaque plot est pourvu de moyens permettant son ancrage sur un support qui pourrait être le sol ou un mur. A cette fin, chaque plot, réalisé sous forme d'un cône creux comporte des perçages dans sa surface d'appui sur le support et dans sa face latérale, qui permettent le passage de tiges de fixation.

Par conséquent le document FR-A-2 483 990 n'est déjà pas relatif au problème de la fixation des plots de support sur des dalles reposant sur le sol, et, en plus, utilise des moyens de fixation des plots sur un support qui se distingue fondammentalement des moyens de fixation énoncés dans la revendication 1. L'objet de la revendication 1 ne découle donc pas de façon évidente de l'état de la technique qui vient d'être décrit.

Des caractéristiques avantageuses de la structure de plancher selon l'invention sont décrites dans les revendications dépendantes.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant deux modes de réalisation de l'invention et dans lesquels

La figure 1 est une vue en perspective éclatée avec arrachement, d'un premier mode de réalisation d'une structure de plancher selon l'invention.

La figure 2 est une vue en perspective éclatée à plus granche échelle et avec arrachement de la structure selon la figure 1.

La figure 3 est une vue de dessus d'une partie de la structure de plancher selon la figure 1.

La figure 4 est une vue en coupe selon la ligne IV-IV de la figure 1.

La figure 5 montre une dalle d'un second mode de réalisation d'une structure de plancher selon l'invention.

La figure 6 est une vue en coupe axiale d'un plot de support selon ce deuxième mode de réalisation, suivant la ligne VI-VI de la figure 7.

La figure 7 est une vue de dessus du plot de la figure 6.

La figure 8 est une vue latérale d'une plaque entretoise porteuse d'un dispositif de raccordement électrique, susceptible d'être placée dans les canaux de passage de câbles d'un plancher selon les figures 5 à 7.

La figure 9 est une vue frontale d'une plaque entretoise selon la figure 8 avant le montage du dispositif de raccordement.

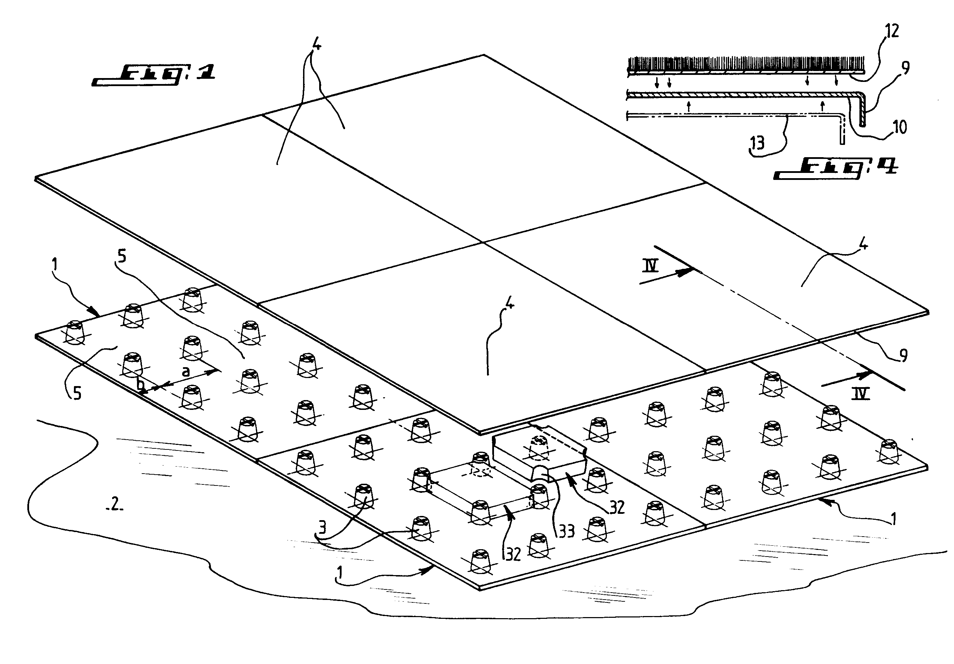

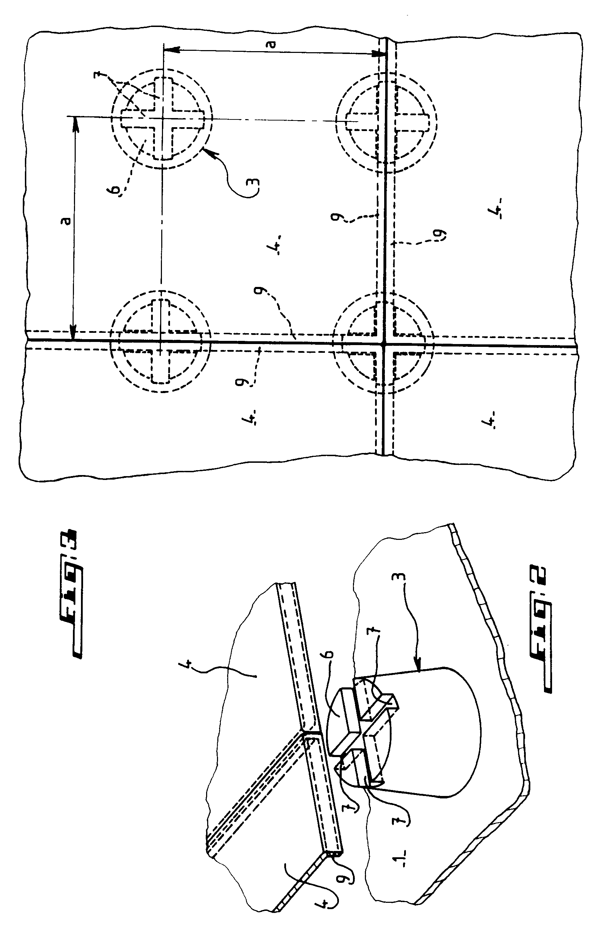

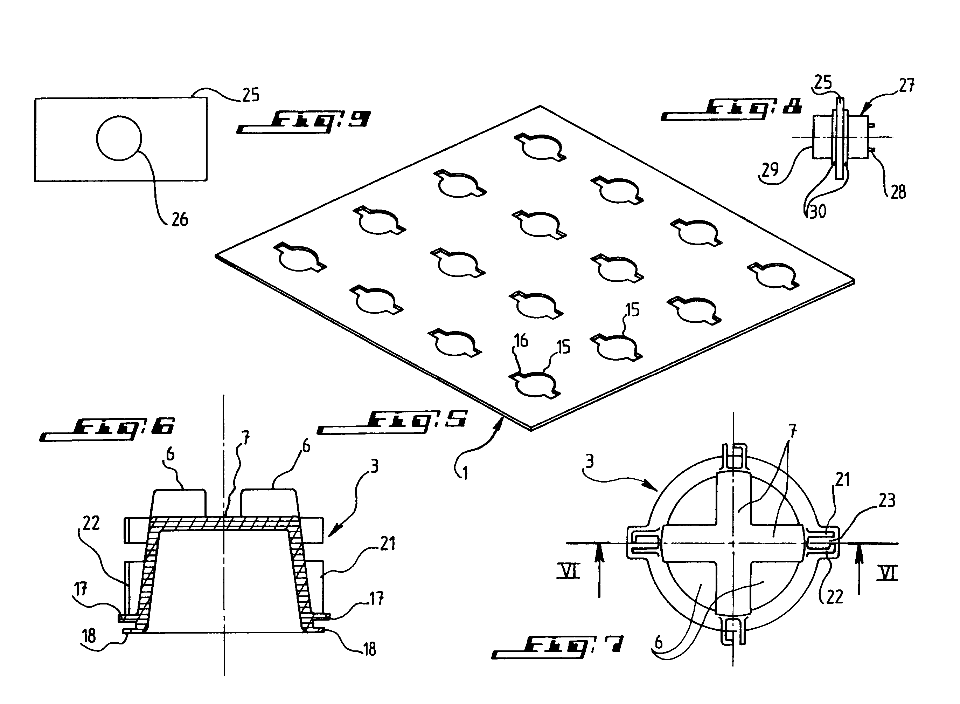

Comme il ressort des figures 1 à 4 représentant un premier mode de réalisation, d'une structure de plancher selon l'invention, celle-ci comprend des dalles 1 qui sont juxtaposées sur le sol ou vrai plancher 2 et portent sur leurs surfaces supérieures des plots de support 3 des plateaux 4 qui sont juxtaposés pour former le faux plancher devant résister au poids des machines ou appareils de l'équipement du local et des personnes qui y circulent.

Chaque dalle 3 porte un certain nombre de plots de support 3 qui sont solidaires de la dalle et sont répartis régulièrement sur toute la surface supérieure de celle-ci de façon à former entre eux un réseaux de canaux de passage 5 des câbles, tuyaux, gaines ou analogues assurant la connexion ou le raccordement des machines ou appareils aux différents systèmes d'alimentation en énergie électrique, air sous pression, en eau et analogue. En disposant les plots 3 en rangées parallèles aux bords des dalles, avantageusement de forme carrée, on obtient un réseau de canaux qui sont parallèles et s'entrecroisent à angles droits. On constate que la disposition des plots 3 est identique pour toutes les dalles de sorte que les rangées des plots 3 et les canaux 5 formés sur différentes dalles juxtaposées sont axialement alignés.

Comme le montre la figure 2, la surface supérieure 5 sur laquelle les plateaux 4 prennent appui présente une configuration de rainures 7 en forme de croix. Selon les figures 2 et 4, les plateaux de faux plancher 4, également de forme carrée, présentent à leur périphérie un rebord 9 qui s'étend sur tout le pourtour du plateau. Ce rebord s'étend perpendiculairement par rapport à la face inférieure du plateau, en direction des plots et est destiné à s'engager dans les rainures 7 de ceux-ci.

Chaque rainure 7 présente une largeur au moins légèrement supérieure au double de l'épaisseur d'un rebord 9 et la profondeur des rainures est au moins égale à la hauteur des rebords. Comme il ressort des figures, les rainures 7 d'une rangée de plots 3 sont axialement alignées. La longueur d'un côté d'un plateau 4 est un multiple de la distance $a$ des deux axes des rainures 7 de deux plots juxtaposés. L'écart $b$ de l'axe longitudinal médian de la rainure 7 d'un plot faisant partie d'une rangée adjacente au bord d'une dalle est sensiblement égale à la moitié de la distance $a$. Dans ces conditions un plateau de faux plancher 4 peut être posé sur les plots 3 de dalles juxtaposées 1 et verrouillé sur son support, grâce à l'engagement de ces bords 9 dans les rainures 7 des plots tout en prenant appui par sa surface inférieure 10 sur la surface supérieure 6 des plots qu'il recouvre. Etant donné la largeur indiquée plus haut d'une rainure 7, celle-ci peut recevoir conjointement deux rebords 9, ce qui permet la juxtaposition des plateaux 4. Grâce à la configuration en croix des rainures 7, quatre plateaux 4 peuvent être juxtaposés et verrouillés par l'engagement de leurs coins dans cette configuration de rainures pour assurer une pose correcte et un verrouillage sûr des plateaux dans les rainures 7. La largeur de celles-ci peut diminuer progressivement dans le sens de la profondeur des rainures. On pourrait aussi donner aux rainures une forme légèrement en contre-dépouille avec une surépaisseur des rebords à leurs extrémités de façon à obtenir un engagement des rebords dans la rainure par emboîtement à force.

Dans ce premier mode de réalisation les dalles 1 et les plots 3 sont réalisés en une pièce en un matériau plastique tel que du polystyrène, polyéthylène, polypropylène ou acrylonitrile-butadiène-styrène (appelé ABS) par thermoformage ou injection. Les dalles avec leurs plots pourraient aussi être réalisées en métal, tel qu'un acier, avantageusement par emboutissage.

De façon générale les dalles peuvent être fabriquées en tout matériau qui présente, sans être mou, une souplesse suffisante assurant le placage des dalles au sol 2. Il est avantageux de réaliser les dalles et les plots de façon que ces derniers soient creux.

Concernant les plateaux 4, ils seront fabriqués en un matériau rigide mais présentant une souplesse ou flexibilité suffisante pour lui permettre de s'adapter à un certain dénivellement des surfaces supérieures 6 des plots de support qu'ils doivent recouvrir, tout en constituant avec les plateaux juxtaposés un plancher rigide et solide. Les plateaux 4 pourraient être réalisés avantageusement en tôle d'acier, le cas échéant zinguée, ou tout autre matériau approprié. Comme le montre la figure 4, la surface supérieure des plateaux 4 pourrait être recouverte d'un revêtement tel qu'un élément de moquette 12 tandis qu'un isolant acoustique et coupe-feux tel que représenté en 13 pourrait être appliqué à la face inférieure et interne 10 des plateaux.

Les figures 5 à 7 montrent un deuxième mode de réalisation où les dalles 1 et les plots de support 3 sont réalisés séparément et amoviblement assemblables. A cette fin, chaque dalle 1 est formée par un tapis en matière plastique tel que du PVC ou une tôle fine en acier galvanisé ou tout autre matériau, dans lequel on a découpé à l'endroit des plots 3 du premier mode de réalisation des évidements circulaires 15 présentant deux excroissances 16 qui sont diamétralement opposées. Comme il ressort des figures 6 et 7, les plots de support 3 sont formés par des éléments tronconiques de la même forme générale que les plots 3 du premier mode de réalisation. Comme ces derniers, ils présentent a leurs extrémités supérieures d'appui la configuration en croix des rainures 7. L'extrémité opposée du plot de support présente un diamètre légèrement inférieur au diamètre des évidements 15 des dalles. A cette extrémité, le plot comporte, diamétralement opposées, deux paires de pattes. Les deux pattes 17, 18 de chaque paire font radialement saillie vers l'extérieur et sont axialement superposées. Les pattes inférieures 18, contrairement aux pattes supérieures 17, présentent des dimensions inférieures à celles des excroissances 16 de façon à pouvoir passer à travers celles-ci.

Les plots de support 3 peuvent ainsi être assemblés à une dalle en les posant sur celle-ci de façon que la patte 17 passe à travers les excroissances 16 tandis que les pattes supérieures 18 forment butée. L'écart entre les deux pattes étant supérieur à l'épaisseur de la dalle, les plots sont verrouillables sur la dalle par une rotation autour de leur axe longitudinal selon un angle de, par exemple, 90°.

On constate en outre que les plots présentent deux ailes 21, 22 qui font radialement saillie vers l'extérieur à partir de la surface extérieure tronconique du plot et s'étendent axialement sur celle-ci. Elles délimitent entre elles une fente axiale 23 de façon à pouvoir constituer un support pour la mise en place de cloisons qui permettent un compartimentage du plancher et des jouées de fermeture de l'espace sous le faux plancher.

Comme l'illustre les figures 8 et 9, les fentes axiales 23 peuvent également servir pour la mise en place et le maintien de plaques d'entretoise 25 qui portent des prises de raccordement électrique. A cette fin une plaque 25 présente un évidement traversant 26 permettant le montage sur la plaque d'un dispositif de raccordement électrique 27. A un côté de la plaque 25 sont prévues les bornes de branchement aux fils d'alimentation, indiquées en 28, tandis qu'à l'autre côté de la plaque, le dispositif 27 est conformé en prise électrique 29. Le dispositif 27 peut être fixé à la plaque 25 à l'aide d'écrous de serrage 30, disposés de part et d'autre de la plaque, sur le corps du dispositif 27, ou de toute autre manière connue appropriée.

La structure de plancher selon l'invention permet également la réalisation de parois de séparation dans le réseau des canaux. Cette paroi est formée par juxtaposition de blocs de séparation 32 montrés à la figure 1 et avantageusement réalisés en un matériau thermiquement et phoniquement isolant. Chacun des blocs est pourvu à ses arêtes axiales d'évidements 33 de forme complémentaire au profil des plots de support 3. Ainsi conformés, ces blocs peuvent être placés dans les canaux du plancher en étant juxtaposés les uns aux autres pour former une paroi continue. Ces parois peuvent être formées aussi bien dans une structure de plancher selon les figures 1 à 4 que dans le mode de réalisation représenté aux figures 5 à 7. Il est à noter que ces parois de séparation peuvent assurer une isolation thermique et phonique.

Les plots de support peuvent être de toute matière appropriée mais sont avantageusement réalisés en ABS injecté.

A titre d'exemple, une dalle selon l'invention de forme carrée présente avantageusement des côtés de 50 cm et porte 16 plots de support. Chaque plot présente avantageusement à sa base un diamètre de 5 cm et à son extrémité d'appui un diamètre de 4 cm. La largeur d'une rainure 7 est de l'ordre de 1 cm tandis que la profondeur est de l'ordre de 0,7 cm. La hauteur des plots est variable en fonction du cas d'application.

Bien entendu le nombre de plots et les dimensions des dalles et des plots peuvent être différents selon les cas d'application du plancher.

De façon générale, de nombreuses modifications peuvent être apportées à la structure de plancher qui vient d'être décrite. Ainsi la forme des plots peut être différente de celle représentée et les moyens de verrouillage sur les plots, des plateaux de faux plancher, peuvent être de toute autre nature et forme sans sortir du cadre de la présente invention, telle que décrite dans les revendications.

Il est seulement essentiel que chaque dalle procure par son nombre de plots régulièrement répartis sur toute sa surface une multitude de zones d'appui pour chaque plateau de faux plancher, de façon que celle-ci puisse être réalisée par des éléments présentant une faible épaisseur. Par conséquent, contrairement aux structures de plancher connues, il n'y a pratiquement pas de perte en hauteur due à l'épaisseur des faux planchers. La structure de plancher selon l'invention présente aussi l'avantage de pouvoir être installée facilement et de permettre un libre accès facile à n'importe quel endroit du plancher. De plus, en raison de la multitude des plots et la faible épaisseur des plateaux, il est aisé de découper des fenêtres de visite dans les plateaux.

## Revendications

1. Structure de plancher, notamment pour des locaux pourvus d'un équipement informatique tels que des centres informatiques, salles d'ordinateurs, ou bureaux informatisés, du type comprenant un faux plancher disposé à une certaine hauteur au-dessus du sol du local et formé par des plateaux amoviblement juxtaposés sur des organes de support interposés entre les plateaux et le sol, pour former un espace permettant la pose et le passage de câbles, tuyaux, gaines ou analogue de connexion et de raccordement de l'équipement du local, la structure comprenant des dalles (1) qui sont juxtaposées sur le sol (2) et portent chacune sur leur surface supérieure un certain nombre de plots (3) formant lesdits organes de support, qui sont solidaires des dalles et répartis régulièrement sur toute la surface de celles-ci de façon à former entre eux un réseau de canaux de passage (5) pour lesdits câbles, tuyaux ou analogues et à constituer par leurs surfaces supérieures des zones d'appui (6) relativement rapprochées pour les plateaux (4), caractérisée en ce que les dalles (1) et les plots de support (3) sont réalisés séparément et amoviblement assemblables, que chaque dalle (1) comprend aux emplacements des plots de support (3) des évidements (15) permettant l'insertion de la base des plots (3) et en ce que, dans le cas de plots de support (3) de forme tronconique à section transversale circulaire, les évidements (15) sont circulaires et présentent au moins une, mais avantageusement deux excroissances radialement opposées (16), et les plots (3) présentent à leurs bases d'insertion pour chaque excroissance (16) au moins une patte (18) qui fait radialement saillie et est conformée pour pouvoir passer à travers cette excroissance (16) lors de l'insertion du plot dans l'évidement (15) de façon à assurer un verrouillage du plot à la suite d'une rotation autour de son axe vers une position où la patte d'ancrage (18) est en prise en-dessous de la surface inférieure de la dalle (1).

2. Structure selon la revendication 1, caractérisée en ce qu'un plot de support (3) présente dans sa surface supérieure d'appui (6) des éléments de verrouillage amovibles (7) des plateaux (4), qui coopèrent avec des éléments (9) de forme complémentaire prévus à la surface inférieure (10) des plateaux (4).

3. Système selon la revendication 2, caractérisé en ce que les éléments de verrouillage d'un plot de support (3) sont formés par une configuration de rainures (7) en forme de croix et les éléments complémentaires d'un plateau sont constitués par des parties en saillie, avantageusement en forme d'un rebord périphérique (9), la largeur d'une rainure (7) étant sensiblement deux fois celle d'un rebord (9) de façon qu'une rainure puisse recevoir les rebords de deux plateaux (4) juxtaposés et un plot permette le verrouillage par leurs coins adjacents de quatre plateaux (4) juxtaposés, et en ce que les rainures (7) des plots d'une dalle (1) et de dalles juxtaposées sont axialement alignés de façon qu'un plateau (4) de forme rectangulaire ou carrée puisse s'engager par son rebord (9) dans des rainures (7) des plots (3) correspondant et prendre appui par sa surface inférieure (10) sur les faces supérieures (6) des plots (3) qu'il recouvre.

4. Structure selon la revendication 3, caractérisée en ce que les rainures (7) et/ou les rebords (9) présentent une forme permettant un verrouillage par emboîtement forcé des plateaux (4) sur les plots de support (3).

5. Structure selon l'une des revendications précédentes, caractérisé en ce qu'un plateau (4) de faux plancher est réalisé en un matériau rigide, mais ayant une certaine souplesse de façon qu'il puisse prendre appui sur tous les plots (3) qu'il recouvre et s'adapter ainsi à un certain dénivellement des surfaces d'appui (6) de ceux-ci.

6. Structure selon l'une des revendications précédentes, caractérisé en ce que les dalles (1) sont réalisées en un matériau ayant une souplesse suffisante pour assurer leur placage au sol (2).

7. Structure selon l'une des revendications précédentes, caractérisée en ce que la dalle est réalisée en matière plastique telle que du PVC ou en métal avantageusement en tôle d'acier.

8. Structure selon l'une des revendication 1 à 7, caractérisée en ce qu'une seconde patte radiale (17) est prévue axialement au-dessus et à une certaine distance de la patte d'ancrage (18), cette patte servant de butée lors de l'insertion du plot dans un évidement (15) de la dalle (1).

9. Structure selon l'une des revendications 1 à 8, caractérisée en ce qu'un plot de support (3) est prévu sur sa surface radialement externe de rainures (23) axiales avantageusement diamétralement opposées.

10. Structure selon la revendication 9, caractérisée en ce qu'une rainure axiale (23) est formée par deux ailes (21, 22) axiales parallèles écartées.

11. Structure selon l'une des revendications 9 ou 10, caractérisée en ce qu'elle comporte des plaques entretoises porteuses (25) d'un dispositif de raccordement électrique (27), susceptibles d'être placées dans les rainures (23) de plots adjacents (3).

12. Structure selon l'une des revendications précédentes, caractérisée en ce qu'elle comprend des blocs de séparation (32) pourvus au niveau de leurs arêtes axiales d'évidements (33) de forme complémentaire au profil de plots, de façon à être insérables entre quatre plots (3) voisins pour pouvoir former une paroi de séparation à l'intérieur du plancher, lorsqu'ils sont juxtaposés.

13. Structure selon l'une des revendications précédentes, caractérisé en ce qu'un revêtement (12) tel qu'un revêtement du type moquette peut être rapporté à la surface supérieure des plateaux (4) et, le cas échéant, un isolant acoustique et, le cas échéant, une matière coupe-feux peuvent être appliqués à la face inférieure (10) des plateaux.

## Patentansprüche

1. Fussbodenaufbau insbesondere für mit einer Datenverarbeitungsanlage, ausgestattete Arbeitszimmer, wie Datenverarbeitungszentralen, Rechnerräumen oder mit Datentverarbeitungsgeräten, der einen in einer gewissen Höhe über dem Boden des Raumes angeordneten und durch Platten gebildeten Blindfussboden aufweisenden Gattung, die auf zwischen den Platten und dem Boden gefügte Tragglieder abnehmbar nebeneinander gestellt sind, um einen die Verlegung und den Durchgang von Kabeln, Rohrleitungen, Hüllen oder dergleichen für die Verbindung und den Anschluss der Ausrüstung des Raumes gestatten den Raum zu bilden, wobei der Aufbau Bauplatten (1) aufweist, die auf dem Boden (2) nebeneinander liegen und jeweils auf ihrer oberen Fläche eine gewisse Anzahl von, die besagten Tragglieder bildenden Stützblöcken (3) tragen, die mit dem Bauplatten fest verbunden und regelmässig auf der ganzen Fläche derselben verteilt sind, um untereinander ein Netz von Durchgangskanälen (5) für die besagten Kabel, Rohrleitungen oder dergleichen zu bilden und mit deren oberen Flächen verhältnismässig nahe gelegene Stützbereiche (6) für die Platten (4) zu bilden, dadurch gekennzeichnet, dass die Bauplatten (1) und die Tragstützblöcke (3) einzeln und abnehmbar zusammenfügbar hergestellt sind, dass jede Bauplatte (1) an den Stellen der Trägerstützblöcke (3) die Einführung der unteren Teiles der Stützblöcke (3) gestattende Aussparungen (15) aufweist und dass in dem Fall von kegelstumpfförmigen Tragstützblöcken (3) mit kreisrundem Querschnitt die Aussparungen (15) kreisförmig sind und wenigstens eine aber vorzugsweise zwei radial entgegengesetzte Ausstülpungen (16) aufweisen und die Stützblöcke (3) and ihren unteren Einfügungsteilen für jede Ausstülpung (16) wenigstens eine Pratze (18) aufweisen, die radial vorsteht und gestaltet ist, um durch diese Ausstülpung (16), während der Einführung des Stützblockes in die Aussparung (15) hindurch geführt werden zu können, um eine Verriegelung des Stützblockes im Anschluss an eine Drehung um seine Achse herum zu derjenigen Stellung hin, wo die Verankerungspratze (18) im Eingriff unterhalb der unteren Fläche der Bauplatte (1) ist, zu gewährleisten.

2. Aufbau nach Anspruch 1, dadurch gekennzeichnet, dass ein Tragstützblock (3) in seiner oberen Stützfläche (6) abnehmbare Elemente (7) zur Verriegelung der Platten (4) aufweist, die mit an der unteren Fläche (10) der Platten (4) vorgesehenen Elementen (9) entsprechender Gestalt zusammenwirken.

3. System nach Anspruch 2, dadurch gekennzeichnet, dass die Verriegelungselemente eines Tragstützblockes (3) durch eine kreuzförmige Zusammensetzung von Nuten (7) gebildet werden und die Komplementärelemente einer Platte durch vorstehende Teile vorzugsweise in der Gestalt einer Umfangsrandleiste (9) gebildet werden, wobei die Breite einer Nut (7) etwa die doppelte einer Randleiste (9) ist, damit eine Nut die Randleisten zweier nebeneinander angeordneten Platten (4) aufnehmen kann und ein Stützblock die Verriegelung von vier nebeneinander gestellten Platten (4) durch deren angrenzenden Ecken gestellten kann und dass die Nuten (7) der Stützblöcke einer Bauplatte (1) und von nebeneinander gestellten Bauplatten axial fluchten, damit eine Platte (4) rechteckigen oder viereckiger Gestalt mit ihrer Randleiste (9) in Nuten (7) der entsprechenden Stützblöcke (3) eingreifen und sich mit ihrer unteren Fläche (10) an der oberen Flächen (6) der Stützblöcke (3), die sie überdeckt, abstützen kann.

4. Aufbau nach Anspruch 3, dadurch gekennzeichnet, dass die Nuten (7) und/oder die Randleisten (9) eine, eine Verriegelung durch Zwangsaufstecken der Platten (4) auf die Tragstützblöcke (3) gestattende Gestalt aufweisen.

5. Aufbau nach einem der vorangehenden Ansprüche, dadurch gekennzeichnet, dass eine Blindfussbodenplatte (4) aus einem Steifen jedoch eine gewisse Nachgiebigkeit aufweisenden Werkstoff hergestellt wird, damit sie sich an allen Stützblöcken (3), die sie überdeckt, abstützen kann und sich somit an einen gewissen Höhenunterschied der Stützflächen (6) derselben anpassen kann.

6. Aufbau nach einem der vorangehenden Ansprüche, dadurch gekennzeichnet, dass die Bauplatten (1) aus einem Werkstoff hergestellt werden, der eine genügende Nachgiebigkeit aufweist, um deren Anliegen am Boden (2) zu gewährleisten.

7. Aufbau nach einem der vorangehenden Ansprüche, dadurch gekennzeichnet, dass die Bauplatte aus einem Kunststoff wie PVC oder aus Metall, vorzugsweise aus Stahlblech hergestellt wird.

8. Aufbau nach einem der Ansprüche 1 bis 7, dadurch gekennzeichnet, dass eine zweite radial Pratze (17) axial oberhalb und in einer gewissen Entfernung von der Verankerungspratze (18) vorgesehen ist, wobei diese Pratze als Anschlag, während der Einfuhrung des Stützblockes in eine Aussparung (15) der Bauplatte (1) dient.

9. Aufbau nach einem der Ansprüche 1 bis 8, dadurch gekennzeichnet, dass ein Tragstützblock (3) an seiner radial äusseren Oberfläche mit vorteilhaft diametral entgegengesetzten Axialnuten (23) versehen ist.

10. Aufbau nach Anspruch 9, dadurch gekennzeichnet, dass eine Axialnut (23) durch zwei axiale parallele und im Abstand voneinander angeordnete Flanschen (21, 22) gebildet wird.

11. Aufbau nach einem der Ansprüche 9 oder 10, dadurch gekennzeichnet, dass er eine elektrische Anschlussvorrichtung (27) tragende Zwischenplatten (25), die fähig sind, in die Nuten (23) von benachbarten Stützblöcken (3) gestellt zu werden, aufweist.

12. Aufbau nach einem der vorangehenden Ansprüche, dadurch gekennzeichnet, dass er Trennblöcke (32) aufweist, die im Bereich ihrer Axialkanten mit Aussparungen (33) dem Profil der Stützblöcke entsprechender Gestalt versehen sind, um zwischen vier benachbarten Stützblöcken (3) einfügbar zu sein, um eine Trennwandung innerhalb des Fussbodens, wenn sie nebeneinander gestellt sind, zu bilden.

13. Aufbau nach einem der vorangehenden Ansprüche, dadurch gekennzeichnet, dass ein Uberzug (12) wie ein moquettenartiger Uberzug an der oberen Fläche der Platten (4) angebracht werden kann und gegebenenfalls ein akustischer Isolierstoff und ggf. ein Brandschutzstoff auf die untere Fläche (10) der Platten aufgetragt werden können.

## Claims

1. Floor structure in particular for rooms such as data processing centers, computer rooms or computerized offices provided with a data processing equipment of the type comprising a false floor disposed at some height above the ground of the room and formed of plates removably juxtaposed on support members interposed between the plates and the ground to form a space permitting the laying and the passage of cables, pipes, ducts or the like for the connection and joining of the equipment of the room, the structure comprising slabs (1) which are juxtaposed on the ground (2) and carry each one on their top surface a number of pads (3) forming the said supporting members, which are made fast to the slabs and regularly distributed over the whole surface thereof so as to form therebetween a network of passage-way channels (5) for the said cables, pipes or the like and to constitute with their top surfaces bearing zones (6) relatively near to each other for the plates (4), characterized in that the slabs (1) and the supporting pads (3) are provided for being capable of being separately and removably assembled, in that each slab (1) comprises at the places of the supporting pads (3) hollows (15) permitting the insertion of the base of the pads (3) and in that in the case of supporting pads (3) of frusto-conical shape with a circular cross section, the hollows (15) are circular and exhibit at least one but advantageously two radially opposite excrescences (16) and the pads (3) exhibit at their insertion base for each excrescence (16) at least one lug (18) which projects radially and is shaped so that it may pass through this excrescence (16) upon the insertion of the pad into the hollow (15) so as to ensure a locking of the pad subsequent to a rotation about its axis towards a position in which the anchoring lug (18) is in engagement underneath the bottom surface of the slab (1).

2. Structure according to claim 1, characterized in that one supporting pad (3) exhibits in its bearing top surface (6) removable elements (7) for the locking of the plates (4), which co-operate with elements (9) of complementary shape provided at the bottom surface (10) of the plates (4).

3. System according to claim 2, characterized in that the elements for the locking of a supporting pad (3) are formed by a cross-shaped configuration of grooves (7) and the complementary elements of the plate are constituted by projecting portions advantageously in the shape of a peripheral flange (9), the width of a groove (7) being substantially twice that of a flange (9) so that one groove may receive the flanges of two juxtaposed plates (4) and one pad permits the locking of four juxtaposed plates (4) with their adjacent corners and in that the grooves (7) of the pads of a slab (1) and of juxtaposed slabs are axially aligned so that a plate (4) of rectangular or square shape may engage with its flange (9) grooves (7) of the corresponding pads (3) and bear with its bottom face (10) upon the top faces (6) of the pads (3) it covers.

4. Structure according to claim 3, characterized in that the grooves (7) and/or flanges (9) exhibit a shape allowing a locking through forced fitting of the plates (4) upon the supporting pads (3).

5. Structure according to one of the foregoing claims, characterized in that a counter-floor plate (4) is made from a rigid material but having some yieldingness so that it may bear upon all the pads (3) it covers and thus adapt itself to some variation in the level of the bearing surfaces (6) thereof.

6. Structure according to one of the foregoing claims, characterized in that the slabs (1) are made from a material having a sufficient flexibility to ensure their being closely pressed upon the ground (2).

7. Structure according to one of the foregoing claims, characterized in that the slab is made from plastics material such as PVC or from a metal, advantageously from a steel sheet.

8. Structure according to one of claims 1 to 7, characterized in that a second radial lug (17) is axially provided above and at some distance from the anchoring lug (18), this lug serving as a stop upon the insertion of the pad into one hollow (15) of the slab (1).

9. Structure according to one of claims 1 to 8, characterized in that a supporting pad (3) is provided on its radially outer surface with axial advantageously diametrally opposite grooves (23).

10. Structure according to claim 9, characterized in that an axial groove (23) is formed of two axial, parallel, spaced flanges (21, 22).

11. Structure according to one of claims 9 or 10, characterized in that it comprises spacer plates (25) for supporting an electrical connection device (27) and capable of being placed into the grooves (23) of adjacent pads (3).

12. Structure according to one of the foregoing claims, characterized in that it comprises separation blocks (32) provided at their axial edges with recesses (33) of a shape complementary to the profile of the pads so as to be insertable between four neighbouring pads (3) in order that they may form a separation wall inside of the floor when they are juxtaposed.

13. Structure according to one of the foregoing claims, characterized in that a lining (12) such as a lining of the moquette type may be fitted upon the top surface of the plates (4) and in case of need an acoustic insulation and in case of need a fireproof material may be applied onto the bottom face (10) of the plates.

Fig. 1

Fig. 4

Fig. 3

Fig. 2

Fig.4

Fig.7

Fig.5

Fig.9

Fig.6